(19) Europäisches Patentamt
European Patent Office
Office européen des brevets

(11) **EP 3 511 542 B1**

(12) **EUROPEAN PATENT SPECIFICATION**

(45) Date of publication and mention of the grant of the patent:
**23.09.2020 Bulletin 2020/39**

(21) Application number: **19151979.2**

(22) Date of filing: **15.01.2019**

(51) Int Cl.:
**F01N 9/00** *(2006.01)*

(54) **METHOD TO CONTROL THE AMOUNT OF PARTICULATE COMING OUT OF A PARTICULATE FILTER FOR AN INTERNAL COMBUSTION ENGINE**

VERFAHREN ZUR STEUERUNG DER PARTIKELMENGE AUS EINEM PARTIKELFILTER FÜR EINEN VERBRENNUNGSMOTOR

PROCÉDÉ DE CONTRÔLE DE LA QUANTITÉ DE PARTICULES SORTANT D'UN FILTRE À PARTICULES D'UN MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2018 IT 201800000951**

(43) Date of publication of application:
**17.07.2019 Bulletin 2019/29**

(73) Proprietor: **Magneti Marelli S.p.A.**
**20011 Corbetta (MI) (IT)**

(72) Inventors:
• **DI MARTINO, Umberto**
**41013 CASTELFRANCO EMILIA (MO) (IT)**
• **FRANCIA, Lorenzo**
**40065 PIANORO (BO) (IT)**
• **BENASSI, Daniele**
**40138 BOLOGNA (IT)**

(74) Representative: **Musconi, Roberta et al**
**Studio Torta S.p.A.**
**Via Viotti, 9**
**10121 Torino (IT)**

(56) References cited:
**EP-A1- 2 138 693     WO-A1-2004/015248**

## Description

<u>TECHNICAL FIELD</u>

The present invention relates to a method to control the amount of particulate coming out of a particulate filter for a preferably gasoline-powered internal combustion engine.

<u>PRIOR ART</u>

As already known, an internal combustion engine, preferably but not exclusively gasoline-powered, is provided with an exhaust gas system comprising in turn an exhaust gas after-treatment system with a particulate filter (also known as Gasoline Particulate Filter) arranged along an exhaust pipe; and a catalytic converter also arranged along the exhaust pipe, upstream of the particulate filter. According to a preferred embodiment, the catalytic converter and the particulate filter are arranged one after the other inside a common tubular container.

The exhaust system is further provided with an electronic control system comprising a differential pressure sensor having a first and a second inlet connected to the inlet and, respectively, to the outlet of the particulate filter, and an outlet providing an electrical signal indicating the pressure drop at the ends of said assembly; a temperature sensor arranged at the outlet of the particulate filter and providing an electrical signal indicating the temperature of the exhaust gas at the outlet of the particulate filter; a temperature sensor arranged at the inlet of the particulate filter and providing an electrical signal indicating the temperature of the exhaust gas at the inlet of the particulate filter; and an electronic control unit connected to said sensors and configured to determine the amount of particulate accumulated in the particulate filter and to activate its regeneration when certain conditions occur, e.g. when the amount of accumulated particulate exceeds a predetermined threshold.

The particulate filter acts in fact as a mechanical barrier for the passage of the particulate and is generally constituted by parallel channels with porous walls and alternately obstructed. The obstructions force the exhaust gases to pass through the side walls of the channels, so that the non-combusted particles constituting the particulate are first held back in the porosity of the side walls and then, when these latter are completely full, accumulate on the inner surfaces of the walls of the channels, thus forming a porous layer. The increasing particulate accumulation on the inner surfaces of the channel walls causes an increase of the pressure drop on the particulate filter and therefore of the counterpressure generated by the particulate filter.

Particulate matter cannot be indefinitely accumulated, since large accumulation causes:

- a deterioration of the performance, driveability and consumption of the engine, until ultimately reaching the stall of the engine; and
- the destruction of the particulate filter, in the event of self-priming and uncontrolled combustion of the particulate. In fact, in the presence of large particulate accumulation and under particular driving conditions, "critical" regeneration phenomena can occur, consisting in the sudden and uncontrolled particulate combustion, in turn responsible for the high temperatures generated inside the particulate filter and for the consequent damage to the particulate filter.

It is therefore necessary a periodical removal of the trapped particulate by means of the so-called "regeneration" of the particulate filter, i.e. by removing the accumulated particulate.

Generally, the regenerations can be broadly distinguished into active regenerations, namely controlled by the electronic control unit, and spontaneous regenerations, namely triggered in an uncontrolled and unpredictable way during an accumulation phase.

During the operation of an internal combustion engine it is therefore possible to distinguish accumulation phases, i.e. time lapses in which there is a progressive particulate accumulation in the particulate filter and there is no active regeneration but at the most there is only a spontaneous regeneration, and regeneration phases, i.e. time lapses in which there is an active regeneration and the amount of particulate accumulated in the particulate filter decreases.

The document WO2004015248 describes a method for estimating a trapping efficiency of a particulate filter based on an estimation model using measured and/or given physical quantities; determining an amount of particulate trapped in the particulate filter, which allows reaching said trapping efficiency value and regulating an amount of particulate produced by the internal combustion engine and flowing into the particulate filter and/or an amount of particulate burnt in the particulate filter to obtain said amount of trapped particulate.

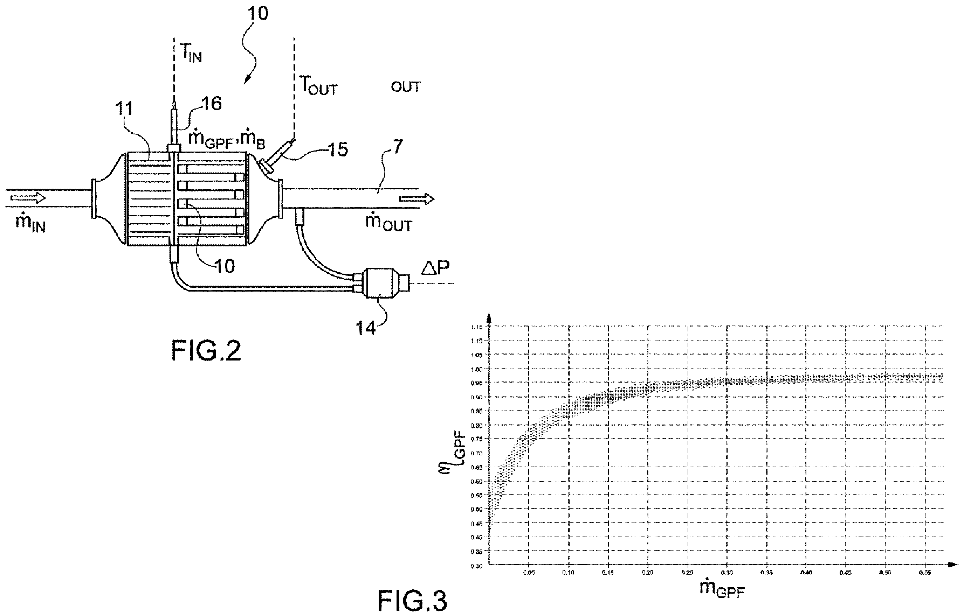

However, it has been experimentally verified that some particulate filters do not exhibit a uniform (and therefore predictable) behaviour when trapping the particulate, especially for reduced values of the amount of particulate trapped in the particulate filter. Figure 3 shows the trapping efficiency $\eta_{GPF}$ of a particulate filter (which is also calculated by the ratio between the amount of particulate produced by the internal combustion engine and flowing into the particulate filter and the amount of particulate coming out of the particulate filter) based on the amount of particulate $\dot{m}_{GPF}$ trapped in the particulate filter.

Reduced values of the amount of particulate $\dot{m}_{GPF}$ trapped in the particulate filter correspond to rather low values of trapping efficiency $\eta_{GPF}$, which could cause an increase in the amount of particulate coming out of the particulate filter up to values that do not meet the legal requirements.

DESCRIPTION OF THE INVENTION

The object of the present invention is to provide a method to control the amount of particulate coming out of a particulate filter for an internal combustion engine, which is free from the drawbacks of the state of the art and is, at the same time, easy and inexpensive to implement. According to the present invention, a method is provided to control the amount of particulate coming out of a particulate filter for an internal combustion engine as claimed in the appended claims.

BRIEF DESCRIPTION OF THE DRAWINGS

The present invention will now be described with reference to the accompanying drawings that show an example of a non-limiting embodiment, in which:

- Figure 1 schematically shows an exhaust gas system for an internal combustion engine equipped with an exhaust gas after-treatment system;
- Figure 2 shows in greater detail a particulate filter of Figure 1; and
- Figure 3 shows the trapping efficiency of a particulate filter based on the amount of trapped particulate.

PREFERRED EMBODIMENTS OF THE INVENTION

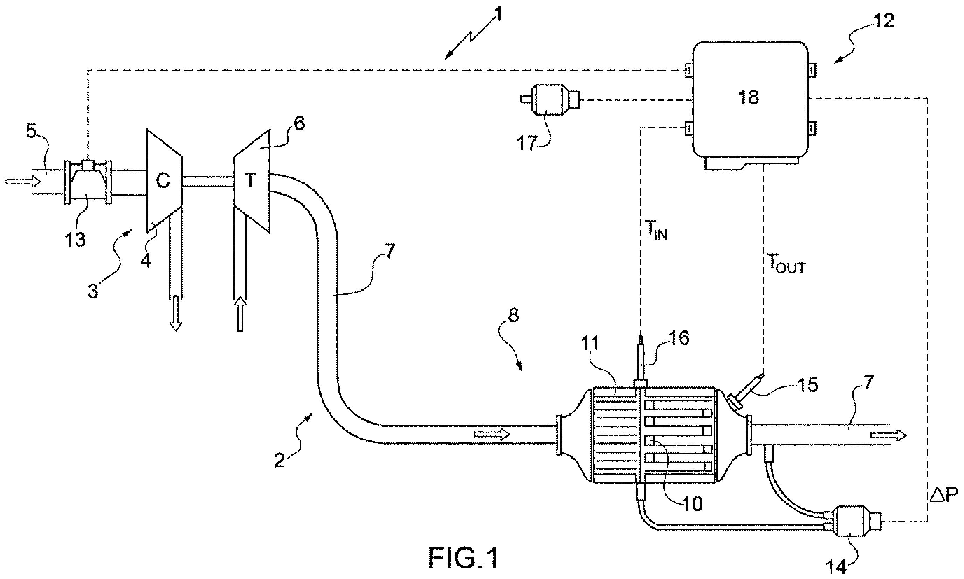

In Figure 1, the number 1 indicates as a whole an internal combustion engine equipped with an exhaust system 2 for exhaust gas in a motor vehicle (not shown). In particular, the following discussion can find advantageous application both in the case of an internal combustion engine 1 with direct injection and in the case of an internal combustion engine 1 with indirect injection.

Furthermore, according to a preferred embodiment, the following discussion finds advantageous but not exclusive application in the case of an internal combustion engine 1 in which the fuel supplied is gasoline.

In this case, by way of non-limiting example, the internal combustion engine 1 is of the supercharged type and comprises a turbocharger 3 formed by a compressor 4 arranged along an air intake duct 5 and a turbine 6 coupled to the compressor 4 and arranged along an exhaust duct 7 that originates from an exhaust manifold.

The internal combustion engine 1 comprises a number of injectors (not shown) that inject the fuel into respective cylinders (not shown) arranged in a line, each of which houses a respective piston (not shown) mechanically connected to a drive shaft to transmit to the drive shaft the force generated by the combustion inside the cylinders. The exhaust gas system 2 is provided with an exhaust gas after-treatment system 8 comprising a particulate filter 10 (also known as the Gasoline Particulate Filter) arranged along the exhaust pipe 7, downstream of the turbocharger 3. According to a preferred variant, the exhaust gas after-treatment system 8 is provided with a catalytic converter 11 arranged along the exhaust pipe 7, upstream of the particulate filter 10. According to a preferred embodiment, the catalytic converter 11 and the particulate filter 10 are arranged one after the other inside a common tubular container.

The exhaust system 2 is further provided with an electronic control system 12 comprising an air flow meter (debimeter) 13 arranged along the air intake duct 5 to generate an electrical signal indicating the air flow rate flowing into the intake duct 5; a differential pressure sensor 14 having a first and a second inlet connected to the inlet and, respectively, to the outlet of the particulate filter 10; and an outlet providing an electrical signal indicating the pressure drop $\Delta P$ at the ends of the particulate filter 10; a temperature sensor 15 arranged at the outlet of the particulate filter 10 and providing an electrical signal indicating the temperature $T_{OUT}$ of the exhaust gas coming out of the particulate filter 10; a temperature sensor 16 arranged at the inlet of the particulate filter 10 and providing an electrical signal indicating the temperature $T_{IN}$ of the exhaust gas at the inlet of the particulate filter 10; an atmospheric pressure sensor 17; and an electronic control unit 18 connected to said sensors 13, 14, 15, 16, 17 and configured to determine the amount of particulate accumulated in the particulate filter 10 and configured to activate the regeneration thereof when certain conditions occur, e.g. when the amount of accumulated particulate exceeds a predetermined threshold. The particulate filter 10 acts in fact as a mechanical barrier against the passage of the particulate and is preferably made up of parallel channels with porous walls and alternately obstructed, as schematically shown in Figure 2. The obstructions force the exhaust gases to cross the side walls of the channels, so that the non-combusted particles constituting the particulate are first held back by the porosities of the side walls and then, when these latter are completely full, accumulate on the inner surfaces of the walls of the channels, thus forming a porous layer. The increasing particulate accumulation on the inner surfaces of the channel walls causes an increase of the pressure drop on the particulate filter 10 and therefore of the counterpressure generated by the particulate filter.

It is necessary a periodical removal of the trapped particulate by means of the so-called "regeneration" of the particulate filter 10, i.e. by removing the accumulated particulate. Generally, the regenerations can be broadly distinguished into active regenerations, namely controlled by the electronic control unit, and spontaneous regenerations, namely triggered in an uncontrolled and unpredictable way during an accumulation phase.

During the operation of the internal combustion engine 1 it is therefore possible to distinguish accumulation phases, i.e. time lapses in which there is a progressive accumulation of particulate in the particulate filter 10 and there is no active regeneration, but at the most a spontaneous regeneration, and phases regeneration, i. e. time lapses in which there is an active regeneration controlled by the electronic control unit 18 and the amount of particulate accumulated in the particulate filter decreases.

Hereinafter it is described the strategy implemented by the electronic control unit 18 to control the amount of particulate $\dot{m}_{OUT}$ coming out of the particulate filter 10 so that this amount meets the legal requirements.

As better described hereinafter, the strategy comprises estimating an objective value of the amount of particulate $\dot{m}_{OUT}$ coming out of the particulate filter 10 capable of meeting the legal requirements; estimating a trapping efficiency $\eta_{GPF}$ of the particulate filter 10 based on an estimation model using measured and/or given physical quantities to obtain the objective value of the amount of particulate $\dot{m}_{OUT}$ coming out of the particulate filter 10; determining an amount of particulate $\dot{m}_{GPF}$ trapped in the particular filter 10, which allows reaching said trapping efficiency $\eta_{GPF}$; and adjusting an amount of particulate $\dot{m}_{IN}$ produced by the internal combustion engine 1 and flowing into the particulate filter (10) and/or an amount of particulate $\dot{m}_B$ burnt in the particulate filter 10 based on said amount of trapped particulate $\dot{m}_{GPF}$.

According to what better shown in Figure 2, the mass balance of the particulate filter 10 can be expressed as follows:

$$\dot{m}_{IN} = \dot{m}_{OUT} + \dot{m}_{GPF} + \dot{m}_B \quad [1]$$

in which:

$\dot{m}_{IN}$ represents the amount of particulate produced by the internal combustion engine 1 and flowing into the particulate filter 10;

$\dot{m}_{OUT}$ represents the amount of particulate coming out of the particulate filter 10;

$\dot{m}_{GPF}$ represents the amount of particulate trapped in the particulate filter 10; and

$\dot{m}_B$ represents the amount of particulate burnt (or regenerated) in the particulate filter 10.

It is further defined the efficiency $\eta_{GPF}$ of the particulate filter 10 (or trapping efficiency $\eta_{GPF}$), which can instead be expressed as follows:

$$\eta_{GPF} = 1 - (\dot{m}_{OUT}/\dot{m}_{IN}) \quad [2]$$

$$\eta_{GPF} = (\dot{m}_{GPF} + \dot{m}_B)/\dot{m}_{IN} \quad [3]$$

in which

$\dot{m}_{IN}$ represents the amount of particulate produced by the internal combustion engine 1 and flowing into the particulate filter 10;

$\dot{m}_{OUT}$ represents the amount of particulate coming out of the particulate filter 10; and

$\eta_{GPF}$ represents the efficiency of the particulate filter 10. From [2] it follows that the control variable that can be used by the electronic control unit 18 so that the amount of particulate $\dot{m}_{OUT}$ coming out of the particulate filter 10 meets the legal requirements (i. e. to obtain the objective value of the amount of particulate $\dot{m}_{OUT}$ coming out of the particulate filter 10 capable of meeting the legal requirements) is the efficiency $\eta_{GPF}$ of the particulate filter 10 (or trapping efficiency $\eta_{GPF}$). In other words, by controlling the efficiency $\eta_{GPF}$ of the particulate filter 10 (or trapping efficiency $\eta_{GPF}$) it is possible to adjust the amount of particulate $\dot{m}_{OUT}$ coming out of the particulate filter 10 so that this amount meets the legal requirements (with the same amount of particulate $\dot{m}_{IN}$ produced by the internal combustion engine 1 and flowing into the particulate filter 10).

It has been experimentally verified that the efficiency $\eta^{GPF}$ of the particulate filter 10 (or trapping efficiency $\eta_{GPF}$) varies according to a plurality of control parameters. In particular, the efficiency $\eta_{GPF}$ of the particulate filter 10 varies based on the amount of particulate $\dot{m}_{GPF}$ trapped in the particulate filter 10, the amount of metal powders $\dot{m}_{ASH}$ accumulated in the particulate filter 10 and the volumetric amount $F_{EXH}$ of the exhaust gas passing through the particulate filter 10. The metal powders accumulated in the particulate filter 10 contribute to increase the trapping efficiency $\eta_{GPF}$ of the particulate filter 10 because they obstruct the channels with porous walls forming the particulate filter 10 but, unlike the particulate, cannot be regenerated.

According to a preferred variant, the amount of particulate $\dot{m}_{OUT}$ trapped in the particulate filter 10 is used among the different control parameters mentioned above to allow the electronic control unit 18 to reach an objective value of the efficiency $\eta_{GPF}$ of the particulate filter 10 (and, consequently, of the amount of particulate $\dot{m}_{OUT}$ coming out of the particulate filter 10 so that it meets the legal requirements).

For a given value of the amount of particulate $\dot{m}_{GPF}$ trapped in the particulate filter 10 determined in order to reach an objective value of the efficiency $\eta_{GPF}$ of the particulate filter 10, from [3] it follows that the parameters available to the electronic control unit 18 are two, i.e. the amount of particulate $\dot{m}_{IN}$ produced by the internal combustion engine 1 and flowing into the particulate filter 10 and the amount of particulate $\dot{m}_B$ burnt in the particulate filter 10.

The electronic control unit 18 is therefore provided to implement a strategy that allows controlling the efficiency $\eta_{GPF}$ of the particulate filter 10 by operating, in particular, on the amount of particulate $\dot{m}_{IN}$ produced by the internal combustion engine 1 and flowing into the particulate filter 10 and on the amount of particulate $\dot{m}_B$ burnt in the particulate filter 10.

First, the electronic control unit 18 is configured to estimate the efficiency $\eta_{GPF}$ of the particulate filter 10 and to estimate the efficiency $\eta_{GPF}$ of the particulate filter 10 to obtain the objective value of the amount of particulate $\dot{m}_{OUT}$ coming out of the particulate filter 10 (i.e. meeting the legal requirements). Advantageously, the control unit 18 is provided to estimate the efficiency $\eta_{GPF}$ of the particulate filter 10 based on an estimation model stored inside the control unit 18 and using measured and/or given physical quantities.

Once the efficiency $\eta_{GPF}$ of the particulate filter 10 has been estimated, the electronic control unit 18 is configured to alternatively operate on the amount of particulate $\dot{m}_{IN}$ produced by the internal combustion engine 1 and flowing into to the particulate filter 10 or on the amount of particulate $\dot{m}_{B}$ burnt in the particulate filter 10 or on a combination of the two said particulate flows $\dot{m}_{B}$, $\dot{m}_{IN}$ burnt in the particulate filter 10 and flowing into the particulate filter 10.

It has been experimentally verified that the spontaneous regeneration of the particulate filter 10 is obtained by combustion (oxidation) of the accumulated particulate, which, being mainly composed of carbon, reacts with the oxygen present in the exhaust gas, transforming into carbon monoxide (CO) and carbon dioxide ($CO_2$). In order to spontaneously activate the combustion (oxidation) reaction of the accumulated particulate, certain activation conditions must be verified, in particular relating to the oxygen flow rate present in the exhaust gases and to the exhaust gas temperature (e.g. exhaust gas temperature comprised between 500°C and 600°C).

It has been observed that these activation conditions do not frequently occur under normal operating conditions of the internal combustion engine 1, but are almost always met in the engine cut-off condition, i.e. when it is interrupted the fuel delivery to the injectors, which occurs during the release phase (namely with the accelerator pedal fully raised and the internal combustion engine 1 driven by the wheels).

Under stoichiometric conditions of the air/fuel ratio of the exhaust gas ($\lambda$ = 1), in fact, the comburent (oxygen) flow rate present in the exhaust gases does not allow a spontaneous activation of the combustion (oxidation) reaction of the accumulated particulate.

In the case of a high air/fuel equivalence ratio, namely when the exhaust gas air/fuel equivalence ratio $\lambda$ (i.e. the ratio between the air/fuel ratio of the exhaust gas and the air/fuel ratio of the exhaust gas under stoichiometric conditions) is less than 1, an excess of fuel is present and the comburent (oxygen) in the exhaust gas does not allow a spontaneous activation of the combustion (oxidation) reaction of the accumulated particulate.

On the other hand, in the case of a low air/fuel equivalence ratio, namely when the exhaust gas air/fuel equivalence ratio $\lambda$ (i.e. the ratio between the air/fuel ratio of the exhaust gas and the air/fuel ratio of the exhaust gas under stoichiometric conditions) is higher than 1, there is an excess of comburent (oxygen) in the exhaust gas, which allows a spontaneous activation of the combustion (oxidation) reaction of the accumulated particulate.

Consequently, it is clear that in the engine cut-off condition, namely by interrupting the fuel delivery to the injectors, it is obtained the maximum oxygen flow rate present in the exhaust gas available for the spontaneous combustion reaction (oxidation) of the particulate accumulated in the particulate filter 10.

The amount of particulate $\dot{m}_{B}$ burnt in the particulate filter 10 is then adjusted by the electronic control unit 18 by adjusting (inhibiting or allowing, for a given time lapse $\Delta t$) the engine cut-off condition.

On the other hand, with regard to the amount of particulate $\dot{m}_{IN}$ flowing into the particulate filter 10, the electronic control unit 18 is provided to perform a control of the parameters that adjust the production of particulate produced by the internal combustion engine 1.

As already known, the particulate is a by-product of incomplete combustion whose formation is due to the phenomenon known as fuel/wall impingement (i.e. the rebound of the fuel droplets on the walls of the cylinders and of the relative pistons and the formation of a liquid film) or is influenced by thermodynamic parameters (such as fuel type, temperature and fuel pressure).

The amount of particulate $\dot{m}_{IN}$ flowing into the particulate filter 10 is then adjusted by the electronic control unit 18 by controlling the operating parameters that influence the particulate formation process inside the internal combustion engine 1.

In particular, the electronic control unit 18 is configured to adjust the amount of particulate $\dot{m}_{IN}$ flowing into the particulate filter 10 by controlling any or any combination of the operating parameters selected in the following (non-exhaustive) list:

- number of injections (single main injection or multi-injection);
- sequence (or pattern) of reference injections to be implemented for each cylinder;
- start of injection angle SOI associated with each injection;
- end of injection angle EOI associated with each injection;
- amount of fuel injected for each injection;
- pressure of fuel injected for each injection; and
- air/fuel equivalence ratio $\lambda$ of the exhaust gas (i.e. the ratio between the air/fuel ratio of the exhaust gas and the air/fuel ratio of the exhaust gas under stoichiometric conditions).

The advantages of the strategy described up to now are evident from the preceding discussion.

In particular, the described strategy allows controlling the amount of particulate $\dot{m}_{OUT}$ coming out of the particulate filter 10 so that this amount meets the legal requirements and, at the same time, allows optimizing the operation of the particulate filter 10 in an efficient (i.e. with adequate accuracy), effective (i.e. rapidly and without committing excessive computing power to the electronic control unit 18) and cost-effective (i.e. without requiring the installation of expensive additional components and/or sensors with respect to those normally present) way.

## Claims

1. A method to control the amount of particulate ($\dot{m}_{OUT}$) coming out of a particulate filter (10) for an internal combustion engine (1) comprising the steps of:

   - estimating an objective value of the amount of particulate ($\dot{m}_{OUT}$) coming out of the particulate filter (10), which is capable of meeting the legal requirements;
   - estimating a trapping efficiency ($\eta_{GPF}$) of the particulate filter (10) based on an estimation model using measured and/or given physical quantities so as to obtain the objective value ($\dot{m}_{OUT}$) of the amount of particulate coming out of the particulate filter (10);
   - determining an amount of particulate ($\dot{m}_{GPF}$) trapped in the particulate filter (10), which allows reaching said trapping efficiency ($\eta_{GPF}$);
   - adjusting an amount of particulate ($\dot{m}_{IN}$) produced by the internal combustion engine (1) and flowing into the particulate filter (10) and an amount of particulate ($\dot{m}_B$) burnt in the particulate filter (10) so as to obtain said amount ($\dot{m}_{GPF}$) of trapped particulate.

2. A method according to claim 1, wherein the step of adjusting the amount of particulate ($\dot{m}_B$) burnt in the particulate filter (10) comprises adjusting the engine cut-off phase, during which the delivery of fuel, which takes place during the release phase, is interrupted.

3. A method according to claim 2, wherein the step of adjusting the engine cut-off phase comprises inhibiting or permitting the engine cut-off phase for a time lapse having a predetermined duration ($\Delta T$).

4. A method according to any one of the preceding claims, wherein the step of adjusting the amount of particulate ($\dot{m}_{IN}$) produced by the internal combustion engine (1) and flowing into the particulate filter (10) comprises controlling the parameters that adjust the production of particulate in the internal combustion engine (1).

5. A method according to claim 4, wherein the step of adjusting the amount of particulate ($\dot{m}_{IN}$) produced by the internal combustion engine (1) and flowing into the particulate filter (10) comprises controlling any operating parameter or any combination of the operating parameters chosen among the following ones:

   - number of injections (single main injection or multi-injection);
   - sequence (or pattern) of reference injections to be operated for each cylinder;
   - start of injection angle SOI associated with each injection;
   - end of injection angle EOI associated with each injection;
   - amount of fuel injected with each injection;
   - pressure of fuel injected with each injection;
   - air/fuel equivalence ratio of the exhaust gas.

## Patentansprüche

1. Verfahren zur Steuerung der Menge an Partikeln ($\dot{m}OUT$), die aus einem Partikelfilter (10) für einen Verbrennungsmotor (1) austreten, umfassend die Schritte:

   - Abschätzen eines Zielwerts der aus dem Partikelfilter (10) austretenden Partikelmenge ($\dot{m}OUT$), der in der Lage ist, die gesetzlichen Anforderungen zu erfüllen;

   - Schätzen eines Abscheidegrads ($\eta GPF$) des Partikelfilters (10) auf der Grundlage eines Schätzmodells unter Verwendung gemessener und/oder gegebener physikalischer Größen, um den Zielwert ($\dot{m}_{OUT}$) der aus dem Partikelfilter (10) austretenden Partikelmenge zu erhalten;

   - Bestimmen einer Partikelmenge ($\dot{m}GPF$), die in dem Partikelfilter (10) zurückgehalten wird, um das Erreichen des Abscheidegrads ($\eta GPF$) zu ermöglichen;
   - Einstellen einer Partikelmenge ($\dot{m}IN$), die von dem Verbrennungsmotor (1) erzeugt wird und in den Partikelfilter (10) strömt, und einer Partikelmenge ($\dot{m}B$), die in dem Partikelfilter (10) verbrannt wird, um so die Menge ($\dot{m}GPF$) an abgeschiedenen Partikeln zu erhalten.

2. Verfahren nach Anspruch 1, wobei der Schritt des Einstellens der in dem Partikelfilter (10) verbrannten Partikelmenge ($\dot{m}B$) das Einstellen der Motorabschaltphase umfasst, während der die Kraftstoffzufuhr, die während der Freisetzungsphase stattfindet, unterbrochen wird.

3. Verfahren nach Anspruch 2, wobei der Schritt des Einstellens der Motorabschaltphase das Sperren oder Zulassen der Motorabschaltphase für eine Zeitspanne mit einer vorbestimmten Dauer umfasst ($\Delta T$).

4. Verfahren nach einem der vorhergehendenAnsprü-

che, wobei der Schritt des Einstellens der Partikelmenge ($\dot{m}$IN), die durch den Verbrennungsmotor (1) erzeugt wird und in den Partikelfilter (10) strömt, das Steuern der Parameter umfasst, welche die Erzeugung von Partikeln in dem Verbrennungsmotor (1) einstellen.

**5.** Verfahren nach Anspruch 4, wobei der Schritt des Einstellens der Partikelmenge ($\dot{m}$IN), die durch den Verbrennungsmotor (1) erzeugt wird und in den Partikelfilter (10) strömt, das Steuern eines Betriebsparameters oder einer Kombination der Betriebsparameter umfasst, die aus den folgenden ausgewählt werden:

- Anzahl der Einspritzungen (einzelne Haupteinspritzung oder Mehrfacheinspritzung);
- Sequenz (oder Muster) von Referenzeinspritzungen, die für jeden Zylinder zu betätigen sind;
- Beginn des mit jeder Einspritzung verbundenen Einspritzwinkels SOI;
- Ende des mit jeder Einspritzung verbundenen Einspritzwinkels EOI;
- die bei jeder Einspritzung eingespritzte Kraftstoffmenge;
- Druck des bei jeder Einspritzung eingespritzten Kraftstoffs;
- Luft/Kraftstoff-Äquivalenzverhältnis des Abgases.

**Revendications**

**1.** Procédé de contrôle de la quantité de particules ($\dot{m}$OUT) sortant d'un filtre à particules (10) pour un moteur à combustion interne (1) comprenant les étapes de :

- l'estimation d'une valeur objective de la quantité de particules ($\dot{m}$OUT) sortant du filtre à particules (10), qui est apte à satisfaire les exigences légales ;
- l'estimation d'un rendement de piégeage ($\eta$GPF) du filtre à particules (10) sur la base d'un modèle d'estimation utilisant des grandeurs physiques mesurées et/ou données de façon à obtenir la valeur objective ($\dot{m}$OUT) de la quantité de particules sortant du filtre à particules (10) ;
- la détermination d'une quantité de particules ($\dot{m}$GPF) piégées dans le filtre à particules (10), qui permet d'atteindre ledit rendement de piégeage ($\eta$GPF) ;
- l'ajustement d'une quantité de particules ($\dot{m}$IN) produites par le moteur à combustion interne (1) et circulant dans le filtre à particules (10) et d'une quantité de particules ($\dot{m}$B) brûlées dans le filtre à particules (10) de façon à obtenir ladite quantité ($\dot{m}$GPF) de particules piégées.

**2.** Procédé selon la revendication 1, dans lequel l'étape d'ajustement de la quantité de particules ($\dot{m}$B) brûlées dans le filtre à particules (10) comprend l'ajustement de la phase de coupure du moteur, au cours de laquelle la distribution de carburant, qui se produit au cours la phase de libération, est interrompue.

**3.** Procédé selon la revendication 2, dans lequel l'étape d'ajustement de la phase de coupure du moteur comprend l'empêchement ou l'autorisation de la phase de coupure du moteur pendant un laps de temps ayant une durée prédéterminée ($\Delta T$).

**4.** Procédé selon l'une quelconque des revendications précédentes, dans lequel l'étape d'ajustement de la quantité de particules ($\dot{m}$IN) produites par le moteur à combustion interne (1) et circulant dans le filtre à particules (10) comprend le contrôle des paramètres qui ajustent la production de particules dans le moteur à combustion interne (1).

**5.** Procédé selon la revendication 4, dans lequel l'étape d'ajustement de la quantité de particules ($\dot{m}$IN) produites par le moteur à combustion interne (1) et circulant dans le filtre à particules (10) comprend le contrôle d'un quelconque paramètre de fonctionnement ou d'une quelconque combinaison des paramètres de fonctionnement choisis parmi les suivants :

- le nombre d'injections (injection principale unique ou injections multiples) ;
- la séquence (ou configuration) d'injections de référence à mettre en œuvre pour chaque cylindre ;
- le début d'angle d'injection, SOI, associé à chaque injection ;
- la fin d'angle d'injection, EOI, associée à chaque injection ;
- la quantité du carburant injecté à chaque injection ;
- la pression du carburant injecté à chaque injection ;
- le rapport d'équivalence air/carburant des gaz d'échappement.

FIG.1

EP 3 511 542 B1

FIG.2

FIG.3

EP 3 511 542 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004015248 A